# EUROPEAN PATENT APPLICATION

(11) **EP 4 851 930 A1**
(43) Date of publication of application: **09.12.2026**
(21) Application number: 26180875.2
(22) Date of filing: 26.05.2026
(51) Int. Cl.: G06T 11/10

(54) **GENERATING SYNTHETIC MEDICAL IMAGES WITH PATHOLOGICAL FEATURES**

(30) Priority: 02.06.2025 EP 25180087
(71) Applicant: Bayer Aktiengesellschaft, 51373 Leverkusen (DE)
(72) Inventor: LOURO COSTA OSORIO, Pedro, 08970 Sant Juan Despi (ES); BRÜGGENWERTH, Günther, 51373 Leverkusen (DE); MONTALT TORDERA, Javier, 51373 Leverkusen (DE); MOHAMMADI, Seyed Sadegh, 51373 Leverkusen (DE); LOHAN, Manish, 400607 Thane (IN); BOSE, Subrata, Reading, RG2 6AD (GB)
(74) Representative: BIP Patents

(57) **Abstract**

Systems, methods, and computer programs disclosed herein relate to the generation of synthetic images with pathological features.

## Description

### FIELD OF THE DISCLOSURE

Systems, methods, and computer programs disclosed herein relate to the generation of synthetic medical images with pathological features.

### BACKGROUND

The use of medical images plays a crucial role in both the training of medical professionals and the development of artificial intelligence (AI) models. For medical students and practitioners, recognizing and interpreting pathological features in imaging data is essential for making accurate diagnoses and developing appropriate treatment strategies. Similarly, AI models require a diverse set of image data to learn patterns and make precise predictions.

A significant issue in this context is the unequal distribution of available image data: there are far more medical images of healthy patients than of patients with pathological findings. This discrepancy can hinder both the training of medical professionals and the performance of AI models, as a lack of relevant examples may lead to inadequate disease recognition and diagnosis. Therefore, it is necessary to develop strategies to improve access to high-quality medical images that exhibit pathological features.

### SUMMARY

These and further tasks are addressed by the subject matter of the independent claims of the present disclosure. Preferred embodiments are defined in the dependent claims, the description, and the drawings.

The present disclosure provides means for generating synthetic medical images with pathological features.

In a first aspect, the present disclosure relates to a computer-implemented method comprising:
- displaying a medical image to a user via a graphical user interface;
- receiving input from the user via the graphical user interface, wherein the input specifies parameters of a pathological feature to be inserted into the medical image, and a position in the medical image, wherein the parameters comprise a size of the pathological feature and a shape of the pathological feature, wherein the position indicates where in the medical image the pathological feature is to be inserted;
- defining a control region based at least in part on the size of the pathological feature, wherein the control region defines the region in the medical image into which the pathological feature is to be inserted;
- defining a section around the position in the image, wherein the section encompasses the control region;
- cropping the section;
- feeding (a) the cropped section, (b) the parameters and/or data generated therefrom, and (c) the control region to a trained conditional generative machine learning model, wherein the cropped section serves as input data to the trained conditional generative machine learning model and (i) the parameters and/or data generated therefrom and (ii) the control region serve as condition, wherein the conditional generative machine learning model is configured and was trained based on training data to generate a mask at the position within the control region in the medical image, and to inpaint the mask with the pathological feature, thereby generating a synthetic section, wherein the mask defines the shape of the pathological feature to be inserted;
- receiving the synthetic section comprising the pathological feature as output from the trained conditional generative machine learning model;
- overlaying or replacing the defined section in the medical image with the synthetic section, thereby generating a synthetic medical image;
- outputting the synthetic medical image.

In another aspect, the present disclosure provides a computer system comprising:
a processor; and
a memory storing a computer program configured to perform, when executed by the processor, an operation, the operation comprising:
   - displaying a medical image to a user via a graphical user interface;
   - receiving input from the user via the graphical user interface, wherein the input specifies parameters of a pathological feature to be inserted into the medical image, and a position in the medical image, wherein the parameters comprise a size of the pathological feature and a shape of the pathological feature, wherein the position indicates where in the medical image the pathological feature is to be inserted;
   - defining a control region based at least in part on the size of the pathological feature, wherein the control region defines the region in the medical image into which the pathological feature is to be inserted;
   - defining a section around the position in the image, wherein the section encompasses the control region;
   - cropping the section;
   - feeding (a) the cropped section, (b) the parameters and/or data generated therefrom, and (c) the control region to a trained conditional generative machine learning model, wherein the cropped section serves as input data to the trained conditional generative machine learning model and (i) the parameters and/or data generated therefrom and (ii) the control region serve as condition, wherein the conditional generative machine learning model is configured and was trained based on training data to generate a mask at the position within the control region in the medical image, and to inpaint the mask with the pathological feature, thereby generating a synthetic section, wherein the mask defines the shape of the pathological feature to be inserted;
   - receiving the synthetic section comprising the pathological feature as output from the trained conditional generative machine learning model;
   - overlaying or replacing the defined section in the medical image with the synthetic section, thereby generating a synthetic medical image;
   - outputting the synthetic medical image.

In another aspect, the present disclosure provides a non-transitory computer readable storage medium having stored thereon software instructions that, when executed by a processor of a computer system, cause the computer system to execute the following steps:
- displaying a medical image to a user via a graphical user interface;
- receiving input from the user via the graphical user interface, wherein the input specifies parameters of a pathological feature to be inserted into the medical image, and a position in the medical image, wherein the parameters comprise a size of the pathological feature and a shape of the pathological feature, wherein the position indicates where in the medical image the pathological feature is to be inserted;
- defining a control region based at least in part on the size of the pathological feature, wherein the control region defines the region in the medical image into which the pathological feature is to be inserted;
- defining a section around the position in the image, wherein the section encompasses the control region;
- cropping the section;
- feeding (a) the cropped section, (b) the parameters and/or data generated therefrom, and (c) the control region to a trained conditional generative machine learning model, wherein the cropped section serves as input data to the trained conditional generative machine learning model and (i) the parameters and/or data generated therefrom and (ii) the control region serve as condition, wherein the conditional generative machine learning model is configured and was trained based on training data to generate a mask at the position within the control region in the medical image, and to inpaint the mask with the pathological feature, thereby generating a synthetic section, wherein the mask defines the shape of the pathological feature to be inserted;
- receiving the synthetic section comprising the pathological feature as output from the trained conditional generative machine learning model;
- overlaying or replacing the defined section in the medical image with the synthetic section, thereby generating a synthetic medical image;
- outputting the synthetic medical image.

### BRIEF DESCRIPTION OF THE DRAWINGS

Fig. 1 shows schematically and by way of example a training of a first submodel of the conditional generative model of the present disclosure.
Fig. 2 shows an example of how a mask is generated using the trained first submodel.
Fig. 3 shows an example and schematic representation of the generation of a synthetic medical image using a trained conditional generative model.
Fig. 4 illustrates a computer system according to some example implementations of the present disclosure.
Fig. 5 shows an embodiment of the computer-implemented method of the present disclosure in the form of a flow chart.

### DETAILED DESCRIPTION

Various example embodiments will be more particularly elucidated below without distinguishing between the aspects of the disclosure (method, computer system, computer-readable storage medium). On the contrary, the following elucidations are intended to apply analogously to all the aspects of the disclosure, irrespective of in which context (method, computer system, computer-readable storage medium) they occur.

If steps are stated in an order in the present description or in the claims, this does not necessarily mean that the disclosure is restricted to the stated order. On the contrary, it is conceivable that the steps can also be executed in a different order or else in parallel to one another, unless, for example one step builds upon another step, this requiring that the building step be executed subsequently (this being, however, clear in the individual case). The stated orders may thus be exemplary embodiments of the present disclosure.

As used herein, the articles "a" and "an" are intended to include one or more items and may be used interchangeably with "one or more" and "at least one". As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The terms used in this disclosure have the meaning that these terms have in the prior art, in particular in the prior art cited in this disclosure, unless otherwise indicated.

The present disclosure provides means for generating a synthetic medical image with one or more pathological feature(s).

The term "synthetic" means that the synthetic medical image is not the (direct) result of a physical measurement on a real object under examination, but that the synthetic medical image has been generated by a machine learning model. A synonym for the term "synthetic" is the term "artificial". The synthetic medical image of the present disclosure is however based on one or more measured medical images.

In the first step, a medical image is received and displayed to a user via a graphical user interface.

The medical image may, for example, be read from a data storage device or transferred from an imaging device or a separate computer system.

The medical image represents an examination area of an examination object.

The "examination object" is usually a living being, for example a mammal. In an embodiment of the present disclosure, the examination object is a human.

The "examination area" is a part of the examination object, for example an organ or part of an organ or a plurality of organs or another part of the examination object.

For example, the examination area may be a liver, kidney, heart, lung, brain, stomach, bladder, prostate, intestine, thyroid, eye, breast, skin, bone or a part of said parts or another part of the body of a mammal (for example a human).

In one embodiment, the examination area includes a liver or part of a liver or the examination area is a liver or part of a liver of a mammal, for example a human.

In a further embodiment, the examination area includes a brain or part of a brain or the examination area is a brain or part of a brain of a mammal, for example a human.

In a further embodiment, the examination area includes a heart or part of a heart or the examination area is a heart or part of a heart of a mammal, for example a human.

In a further embodiment, the examination area includes a thorax or part of a thorax or the examination area is a thorax or part of a thorax of a mammal, for example a human.

In a further embodiment, the examination area includes a stomach or part of a stomach or the examination area is a stomach or part of a stomach of a mammal, for example a human.

In a further embodiment, the examination area includes a pancreas or part of a pancreas or the examination area is a pancreas or part of a pancreas of a mammal, for example a human.

In a further embodiment, the examination area includes a kidney or part of a kidney or the examination area is a kidney or part of a kidney of a mammal, for example a human.

In a further embodiment, the examination area includes one or both lungs or part of a lung of a mammal, for example a human.

In a further embodiment, the examination area includes a thyroid or part of a thyroid of a mammal, for example a human.

In a further embodiment, the examination area includes an eye or part of an eye of a mammal, for example a human.

In a further embodiment, the examination area includes one or more bones of a mammal, for example a human.

In a further embodiment, the examination area includes part of the skin a mammal, for example a human.

In a further embodiment, the examination area includes a breast or part of a breast or the examination area is a breast or part of a breast of a female mammal, for example a female human.

In a further embodiment, the examination area includes a prostate or part of a prostate or the examination area is a prostate or part of a prostate of a male mammal, for example a male human.

The term "image" as used herein means preferably a data structure that represents a spatial distribution of a physical signal. The spatial distribution may be of any dimension, for example 2D, 3D, 4D or any higher dimension. The spatial distribution may be of any shape, for example forming a grid and thereby defining pixels or voxels, the grid being possibly irregular or regular. The physical signal may be any signal, for example proton density, tissue echogenicity, tissue radiolucency, measurements related to the blood flow, information of rotating hydrogen nuclei in a magnetic field, color, level of gray, depth, surface or volume occupancy, such that the image may be a 2D or 3D RGB/grayscale/depth image, or a 3D surface/volume occupancy model. An image is usually composed of discrete image elements (e.g., pixels for 2D images, voxels for 3D images, doxels for 4D images).

In an embodiment of the present disclosure, the medical image is a two-dimensional image (2D image). In another embodiment of the present disclosure, the medical image comprises a stack of two-dimensional images (2D images), wherein each 2D medical image of the stack of 2D medical images represents a layer of a three-dimensional examination area of the examination object. In a further embodiment of the present disclosure, the medical image is a three-dimensional image (3D image).

A "medical image" is a visual representation of an examination area of an examination object. Medical images can be used, e.g., for diagnostic and/or treatment purposes.

The medical image is usually a measured image, i.e., the result of an examination of the examination object.

Techniques for generating medical images include X-ray radiography, computerized tomography, fluoroscopy, magnetic resonance imaging, ultrasonography, endoscopy, elastography, tactile imaging, thermography, microscopy, positron emission tomography, optical coherence tomography, fundus photography, and others.

Examples of medical images include CT (computer tomography) scans, X-ray images, MRI (magnetic resonance imaging) scans, PET (positron emission tomography) scans, fluorescein angiography images, OCT (optical coherence tomography) scans, histological images, ultrasound images, fundus images and/or others.

In an embodiment of the present disclosure, the medical image and the synthetic medical image generated therefrom are radiologic images. "Radiology" is the branch of medicine concerned with the application of electromagnetic radiation and mechanical waves (including, for example, ultrasound diagnostics) for diagnostic, therapeutic and/or scientific purposes. In addition to X-rays, other ionizing radiation such as gamma rays or electrons are also used. Since a primary purpose is imaging, other imaging procedures such as sonography and magnetic resonance imaging (MRI) are also included in radiology, although no ionizing radiation is used in these procedures. Thus, the term "radiology" as used in the present disclosure includes, in particular, the following examination procedures: computed tomography, magnetic resonance imaging, sonography, positron emission tomography.

The medical image is displayed to the user via a graphical user interface.

A "graphical user interface" (GUI) is a visual interface that allows users to interact with electronic devices (e.g., computer systems) and software applications through graphical elements such as windows, icons, buttons, and menus, rather than through text-based commands. GUIs enable users to navigate and control the system more intuitively by using visual representations of tasks and functions, making it easier for individuals, including those in specialized fields like medical imaging, to operate complex software without needing extensive technical knowledge. This user-friendly approach enhances accessibility and efficiency, allowing users to focus on their tasks rather than on the underlying technical details.

The "user" may be a physician, radiologist, or other healthcare professional.

The graphical user interface may be part of a PACCS. PACCS stands for "Picture Archiving and Communication System". It is a medical imaging technology used for storing, retrieving, managing, and sharing medical images and related data. PACCS enables healthcare professionals to access and review images from various modalities, such as X-rays, MRIs, and CT scans, in a digital format. Such a system enhances workflow efficiency in medical facilities by facilitating quick access to patient images, improving collaboration among healthcare providers, and supporting better patient care through timely diagnoses and treatment decisions.

In an embodiment of the present disclosure, the user is shown three medical 2D images representing layers along defined axes of a three-dimensional examination area of an examination object. These axes may be the three primary anatomical axes of the human body: the sagittal axis that divides the body into left and right sections, the coronal axis that divides the body into anterior (front) and posterior (back) sections, and the transverse axis that divides the body into superior (upper) and inferior (lower) sections.

The medical image displayed usually shows a healthy examination area of an examination object. A pathological feature is to be inserted into this medical image.

A "pathological feature" refers to any abnormality and/or deviation from the normal structure and function of tissues and/or organs that can be identified through medical imaging techniques such as X-rays, CT scans, MRIs, PET images, ultrasounds and/or others. These features may include tumours, lesions, fractures, cysts, and/or signs of inflammation, among others.

In a further step, input is received from the user via the graphical user interface. The user input specifies a position in the medical image. The position in the image indicates where (at which location in the image) the pathological feature should be inserted. The position may, for example, define the geometric centre of the pathological feature or another point of the pathological feature.

The user may specify the position, for example, by clicking with a computer mouse on a point in the medical image displayed, thereby determining the position. The computer system / computer program of the present disclosure may be configured to determine the coordinates of the position in the medical image based on the position selected by the user. It is also possible for the user to enter the coordinates directly via the graphical user interface, e.g. using a keyboard.

It is also possible for the user to specify multiple positions, e.g. if the pathological feature is to extend over a defined area. The positions then may define the area over which the pathological feature is to extend. For example, the user may use a computer mouse to specify a rectangular, circular, or differently shaped area via the graphical user interface, the parameters of which may then be recorded by the computer system/computer program of the present disclosure. Such area and/or parameters specifying the area may be used to generate the control region. In an embodiment of the present disclosure, the area defined by the user is the control region.

If the user specifies several positions that define an extension of the pathological feature, the input specifies not only the position of the pathological feature in the medical image, but also, at least in part, its size. The size of the physiological feature may also be directly entered by the user, for example, using a keyboard, through the GUI.

In addition to the position of the pathological feature, the user input defines parameters of the pathological feature to be inserted into the medical image.

The user input may, for example, specify which pathological feature (i.e., type of pathological feature) is to be inserted into the medical image. This is particularly useful if the computer system/computer program of the present disclosure is configured to insert different pathological features into a medical image. However, it is also possible that the computer system/computer program of the present disclosure is merely configured to insert a pre-defined type of pathological feature into a medical image; in such a case, specification of the type is not necessary, and the second input may specify parameters of the pre-defined pathological feature.

Parameters of the pathological feature may be size, shape, orientation, margin, density, opacity, internal structure, surrounding tissue effects, vascularity, enhancement pattern (characteristics after administration of a contrast agent), and/or further/other parameters.

"Size" may be an extension in one or more directions. "Size" may be a maximum extension. "Size" may be a volume (e.g., in three-dimensional images) or an area (e.g., in two-dimensional images).

"Shape" may be a categorical variable (e.g., "round" or "spherical" or "star-shaped"). "Shape" may be an indication of how closely the shape of the pathological feature resembles a comparative shape. For example, the comparative shape may be a sphere, and "shape" may indicate the sphericity, i.e., the similarity to a spherical shape. "Sphericity" may be expressed as arbitrary numbers; for example, sphericity may be specified on a scale from *m* to *n,* where *n* may indicate that the shape is spherical and *m* may indicate that the shape deviates significantly from the spherical shape, with *m* and *n* being real numbers. "Sphericity" may be expressed as a calculable measure; an example of such a measure is the sphericity defined by Waddell in 1935 as the ratio of the surface area of an equal-volume sphere to the actual surface area of the pathological feature.

"Orientation" may indicate how a non-spherical pathological feature is oriented. In raster graphics, the orientations of the grid are suitable reference directions for the orientation of the pathological feature, i.e., the orientation may be specified, for example, by the angle(s) that a preferred axis of the pathological feature encloses with one or more directions of the grid. However, the orientation of the pathological feature may also be based on the axes of the examination object (e.g., the agittal axis, the coronal axis and/or the transverse axis).

The term "margin" refers to the boundary or edge of a pathological feature. The margin of a pathological feature may be the area that delineates the lesion from the surrounding normal tissue. A margin may be classified as well-defined (smooth and clear boundaries) or ill-defined (irregular and blending into surrounding tissue) for example. The margin may be specified in the form of a number, for example, on a scale from *m* to *n,* where *n* may indicate that the margin is well-defined and *m* may indicate that the margin is ill-defined, with *m* and *n* being real numbers. Metrics such as "circularity", "irregularity", and "fractal dimension" may be used to express the complexity of the margin.

The terms "density" and "opacity" refer to the appearance of pathological features in radiological images. For example, in X-ray and CT imaging, different tissues have different densities, which affect how they appear on the image. For example, denser tissues (like bone) absorb more X-rays and appear brighter (more radiopaque), while less dense tissues (like fat) absorb fewer X-rays and appear darker (more radiolucent). Density may be quantified using Hounsfield units (HU) in CT imaging, where air has a density of -1000 HU, water is 0 HU, and dense bone can exceed +1000 HU. "Opacity" refers to the degree to which a substance prevents the passage of X-rays or other forms of radiation. It is often used to describe how "dark" or "light" an area appears on an X-ray or CT image. Opacity is often categorized as radiopaque (i.e., areas that are dense and appear white or light on the image such as bone, certain types of lesions), or radiolucent (i.e., areas that are less dense and appear darker such as air, fluid-filled cysts).

Parameters may specify additional properties of the pathological feature in the form of categories and/or numbers. Further examples include: homogeneity vs. heterogeneity, solid vs. cyst, presence and/or types of calcifications, anechoic vs. hypoechoic vs. hyperechoic, subtlety, lobulation (lobulated), spiculation, texture, and/or malignancy.

The type and/or parameters of the pathological feature may be entered, for example, using a keyboard via the graphical user interface. The type and/or parameters of the pathological feature may be selected, for example, from a list using a computer mouse. The type and/or parameters of the pathological feature may be entered, for example, using virtual sliders and/or buttons provided by the graphical user interface.

Parameters of the pathological feature may be specified directly by the user or derived from the user input. For example, the user may enter the parameter "size" directly by specifying one or more dimensions in one or more directions (e.g., in mm, cm, or inches); however, the user may also define a region within the medical image, e.g., using a computer mouse, which defines the dimensions in one or more directions and thus the size of the pathological feature.

The pathological feature may be a lesion, for example. Parameters may specify what type of lesion it is (lesion type) and/or which tissue is affected. The type of lesion may be, for example cysts (fluid-filled sacs that can occur in various tissues (e.g., sebaceous cysts, ovarian cysts)), fibromas, lipomas, adenomas, carcinomas, sarcomas, lymphomas (e.g., Hodgkin lymphoma, non-Hodgkin lymphoma), melanomas, abscesses, granulomas, erythema, psoriasis plaques, hemangiomas, angiomas, dysplastic nevi, atypical moles, pre-cancerous lesions (e.g., cervical dysplasia or actinic keratosis), secondary lesions that arise from the spread of cancer from a primary site to other organs (e.g., lung metastases from breast cancer), idiopathic lesions (e.g., certain types of granulomatous diseases). Parameters may specify the lesion's size, shape, margin, density, opacity, enhancement patterns after administration of a contrast agent, internal structure, vascularity, surrounding tissue effects, and/or other/further characteristics.

The pathological feature may be a tumor, for example. Parameters may specify what type of tumor it is (tumor type), which tissue is affected, whether it is benign or malignant, and whether metastases are present or not. Parameters may specify the size of the tumor, e.g., its length, width, and height, and/or its volume. Parameters may specify the shape of the tumor, i.e. the geometric configuration of the tumor (e.g., round, oval, irregular). Parameters may specify the margin of the tumor, i.e. the characteristics of the tumor's borders (e.g., well-defined, poorly defined, infiltrative). Parameters may specify the tumor's density and/or opacity; the density may be, for example, the radiographic density (e.g., hyperdense, hypodense, isodense). Parameters may specify enhancement patterns of the tumor after administration of a contrast agent (e.g., homogeneous, heterogeneous, rim enhancement). Parameters may specify the tumor's internal structure, e.g., the presence of features within the tumor (e.g., necrosis, cystic areas, calcifications). Parameters may specify the tumor's vascularity, i.e., the degree of blood flow to the tumor, often assessed through imaging techniques like Doppler ultrasound or contrast-enhanced imaging. Parameters may specify surrounding tissue effects, i.e., the impact of the tumor on adjacent structures (e.g., edema, bone erosion, infiltration). Parameters may specify lymphadenopathy, i.e., the presence of enlarged lymph nodes nearby the tumor.

The pathological feature may be inflammatory change (e.g., edema, granuloma, pneumonia, osteomyelitis).

The pathological feature may be a fracture. Parameters specifying the fracture may be the specific anatomical site of the fracture (e.g., distal radius, femur, vertebra), type of fracture (e.g., transverse, oblique, spiral, comminuted, segmental, impacted), degree of displacement of the fracture fragments, lateral movement of fragments, angle formed by the fracture fragments, rotational alignment of the fragments, presence of multiple fracture fragments, characteristics of the fracture line (e.g., smooth, jagged, or irregular), associated soft tissue injury (e.g., hematoma, edema, muscle injury), extension of fracture into a joint surface (intra-articular vs. extra-articular), healing indicators, age of fracture, osteopenia/osteoporosis, and/or other/further characteristics.

The pathological feature may be degenerative abnormality. Parameters specifying the degenerative abnormality may be the specific anatomical site affected by degeneration (e.g., spine, joints, cartilage), type of degeneration (e.g., osteoarthritis, degenerative disc disease, tendinopathy), severity of degenerative changes (e.g., mild, moderate or severe degeneration), morphological changes (e.g., joint space narrowing, bone spurs (osteophytes), disc height loss, changes in the alignment of bones or joints due to degeneration (e.g., joint malalignment, scoliosis in the spine), subchondral changes (e.g., sclerosis, cysts), soft tissue changes (e.g., muscle atrophy, tendon thickening), presence of inflammation and/or other/further characteristics.

The pathological feature may be a vascular abnormality. Parameters specifying the vascular abnormality may be the specific anatomical site of the vascular abnormality (e.g., brain, heart, abdomen), type of abnormality (e.g., aneurysm, stenosis, thrombosis, embolism, malformation), the dimensions of the vascular abnormality (e.g., diameter of an aneurysm or length of a stenosis), the geometric configuration of the abnormality (e.g., saccular or fusiform aneurysm), vessel wall characteristics (e.g., thickness, calcification, lumen characteristics, patency, irregularities in the lumen that may suggest pathology, vascular flow (e.g., velocity, direction), surrounding tissue effects: (e.g., compression of nearby organs, edema), associated findings (e.g., ischemia, hemorrhage). And/or other/further characteristics.

The pathological feature may be calcification. Parameters specifying the calcification may be the specific anatomical site of the calcification (e.g., breast, lung, kidney, joint), the dimensions of the calcification (e.g., diameter), the geometric configuration of the calcification (e.g., round, irregular, linear), density, opacity, distribution and pattern of calcifications (e.g., focal vs. diffuse, linear or clumped), type of calcification (e.g., dystrophic calcification, metastatic calcification, associated findings (e.g., presence of additional abnormalities in the surrounding tissue (e.g., edema, masses, or other lesions)), surrounding tissue changes (e.g., edema, fibrosis), and/or other/further characteristics.

The pathological feature may be a foreign body (e.g., surgical clips or implants, ingested objects, shrapnel, projectile).

Based on the size of the pathological feature, a control region is defined. The control region defines the region within which the trained conditional generative model inserts the pathological feature. The control region usually has the same number of dimensions as the medical image. Usually, the geometric center of the control region corresponds to the position of the pathological feature defined by the user. The trained conditional generative model is configured to insert the pathological feature exclusively within the control region. The control region may, for example, be a circle (e.g., in case of a 2D medical image) or a sphere (e.g., in case of a 3D medical image) with a diameter corresponding to the maximum extent of the pathological feature. However, the control region may also have a shape other than a circle or a sphere.

If the control region has a shape other than a circle or sphere, the control region may be defined based on one or more additional parameters of the pathological feature, such as the shape and/or orientation, in addition to the size of the pathological feature.

In a further step, a section is defined around the position of the pathological feature. The section is larger than the control region. The section encompasses the control region. For example, the section may be twice as large, three times as large, or four times as large as the control region, or it may have a different size. The larger the section, the more computing power is required to generate the pathological feature within the control region. If sufficient computing power is available, the section may in principle encompass the entire medical image. On the other hand, the aim is to insert a pathological feature at the position defined by the user, leaving components of the medical image that are not affected by the pathological feature unchanged. It is therefore not recommended to define a section that covers the entire medical image, as the generation of the pathological feature at the position may have an impact on the surrounding structures. In an embodiment of the present disclosure, the section is 1.5 to 8 times larger than the control region.

The section usually has the same number of dimensions as the medical image. If the medical image is a 2D image, for example, the section is usually a two-dimensional area in the medical image. If the medical image is a 3D image, for example, the section is usually a three-dimensional area in the medical image. If the medical image is a stack of two-dimensional images, then a two-dimensional section is usually determined for each of the two-dimensional images, which specifies a two-dimensional area in the respective image.

In a further step, the section of the medical image is cropped. In other words, the part of the medical image that represents the section is cut out of the medical image; the cut-out part is the section. The section may be a 2D image, a 3D image, or a stack of 2D images.

In a further step, a trained conditional generative machine learning model is provided.

"Machine learning" is a subset of artificial intelligence that involves the development of algorithms and statistical models that enable computer systems to perform tasks without explicit programming. In other words, machine learning involves teaching computer systems to learn and make decisions or predictions based on data.

The term "machine learning model", as used herein, may be understood as a computer implemented data processing architecture. The machine learning model can receive input data and provide output data based on that input data and on parameters of the machine learning model (model parameters). The machine learning model can learn a relation between input data and output data through training. In training, parameters of the machine learning model may be adjusted in order to provide a desired output for a given input.

The process of training a machine learning model involves providing a machine learning algorithm (that is the learning algorithm) with training data to learn from. The term "trained machine learning model" refers to the model artifact that is created by the training process. The training data usually contains the correct answer, which is referred to as the target. The learning algorithm finds patterns in the training data that map input data to the target, and it outputs a trained machine learning model that captures these patterns.

In the training process, input data are inputted into the machine learning model and the machine learning model generates an output. The output may be compared with the (known) target. Parameters of the machine learning model may be modified in order to reduce the deviations between the output and the (known) target to a (defined) minimum.

In general, a loss function can be used for training, where the loss function can quantify the deviations between the output and the target. The aim of the training process can be to modify (adjust) parameters of the machine learning model in order to reduce the loss to a (defined) minimum. The loss function is usually minimized using an optimization method, e.g. a gradient descent method.

The machine learning model of the present invention is a conditional generative machine learning model, also referred to as conditional generative model in this disclosure.

A "generative model" is a type of machine learning model that is designed to learn and generate new data that resembles the training data it was trained on. Generative models capture the underlying distribution of the training data and can generate samples from that distribution.

A "conditional generative model" is a type of generative model that generates data given certain conditions or constraints. Conditional generative models take additional input in the form of a condition that guides the process of data generation. In general, this condition can be anything that provides some sort of context for the generation process, such as a class label, a text description, an image, a histogram and/or any other piece of information. In the case of the present disclosure, the one or more parameters provided by the user (or data generated therefrom) and the control sphere are used as conditions. It is possible that additional data may be used as additional condition(s).

The conditional generative model of the present disclosure is configured and was trained to generate a mask at the position within the control region, and to inpaint the mask with a visible pathological feature.

The conditional generative model of the present disclosure thus inserts the pathological feature into the section in two steps. In a first step, a mask is generated at the position within the control region. The control region determines the maximum extent of the mask. In a second step, the mask is inpainted with the pathological feature. In other words, in the first step, a mask is generated that defines the shape of the pathological feature, and in the second step, the contrast distribution of the pathological feature is determined and the mask is inpainted accordingly.

Thus, the trained conditional generative model may comprise two submodels, a first submodel and a second submodel.

The first submodel may be configured and trained to generate a mask at the position defined by the user within the control region. The mask defines the shape of the pathological feature to be inserted, i.e., the area that is to be replaced by the pathological feature. The mask separates areas that are not to be replaced by the pathological feature from the area that is to be replaced by the pathological feature. The mask defines the outline of the pathological feature and thus its size and shape.

The second submodel is configured and was trained to inpaint the mask generated by the first submodel with the pathological feature. The second model provides contrast information to the mask.

The first and/or second submodel may be or comprise or be based on a diffusion model.

"Diffusion models" focus on modeling the step-by-step evolution of a data distribution from a "simple" starting point to a "more complex" distribution. The underlying concept of diffusion models is to transform a simple and easily sampleable distribution, typically a Gaussian distribution, into a more complex data distribution of interest. This transformation is achieved through a series of invertible operations. Once the model learns the transformation process, it can generate new samples by starting from a point in the simple distribution and gradually "diffusing" it to the desired complex data distribution.

During training, a diffusion model usually comprises a noising model and a denoising model. The noising model usually comprises a plurality of noising stages. The noising model is configured to receive input data (e.g., an image) and produce noisy data in response to receipt of the input data. The noising model introduces noise to the input data to obfuscate the input data after a number of stages, or "timesteps" *T.* The noising model can be or can include a finite number of steps *T or* an infinite number of steps (*T*→ ∞). The noising model may have the same weights/architectures for all timesteps or different weights/architectures for each timestep. The number of timesteps can be global (i.e., timesteps are the same for all pixels of an image) or local (e.g., each pixel in an image might have a different timestep). The denoising model is configured to reconstruct the input data from noisy data. The denoising model is configured to produce samples matching the input data after a number of stages. For example, the diffusion model may include Markov chains at the noising model and/or denoising model. The diffusion models may be implemented in discrete time, e.g., where each layer corresponds to a timestep. The diffusion model may also be implemented in arbitrarily deep (e.g., continuous) time.

The first submodel and/or the second submodel may be or comprise or be based on a Denoising Diffusion Probabilistic Model (DDPM). DDPMs are a class of generative models that work by iteratively adding noise to input data (e.g., an image or a compressed representation) and then learning to denoise from the noisy signal to generate new samples (see, e.g., J. Ho et al.: Denoising Diffusion Probabilistic Models, arXiv:2006.11239v2).

The first submodel and the second submodel are trained on training data. This training data typically comprises, for each reference object of a plurality of reference objects, a medical reference image of a reference area with a pathological feature, a mask delineating the pathological feature in the reference image, and parameters specifying the pathological feature.

The term "reference" is used in this disclosure to distinguish the data used to train and/or validate the conditional generative model from the data used for inference (i.e. used to generate a synthetic medical image using the trained conditional generative model). A "medical reference image" is a medical image as defined herein. A "reference object" is an object from which data is used to train (and validate) the conditional generative model. However, the reference object otherwise has the same properties as the examination object as defined herein. A "reference area" is the region of a reference object that is represented by a medical reference image. The reference area may be identical to the examination area. The reference area may be the same for all reference objects. The term "reference" is not to be understood in any other restrictive sense; this distinction serves only to prevent a clarity objection in patent examination proceedings.

The medical reference images of the training data may be collected from data sources like the UK biobank (see, e.g., C. Sudlow et al.: UK biobank: an open access resource for identifying the causes of a wide range of complex diseases of middle and old age, PLoS medicine 12(3), e1001779 (2015)) or any other source.

The masks delineating pathological features in the medical reference images may be generated manually by experts and/or automatically from the medical reference images using segmentation techniques.

Parameters specifying the pathological features depicted in the medical reference images may be provided by experts and/or generated automatically from the medical reference images using image analysis tools.

Further embodiments are disclosed below. These embodiments are not necessarily subject matter that is covered by patent protection. As is known to those skilled in the art of patent protection, the scope of protection of a patent is defined by the patent claims. The description and drawings are to be used to interpret the patent claims. The embodiments described below are part of the description and not of the patent claims. The following embodiments are intended to give the reader an indication of how various features described in this disclosure can be combined. They are therefore part of the present technical teaching and should not be confused with the subject matter of the patent claims.

Embodiment 1: A computer-implemented method comprising:
- displaying a medical image to a user via a graphical user interface;
- receiving input from the user via the graphical user interface, wherein the input specifies a position in the medical image, and parameters of a visible pathological feature, wherein the parameters comprise a size of the pathological feature and a shape of the pathological feature;
- defining a control region based at least in part on the size of the pathological feature;
- defining a section around the position in the image;
- cropping the section;
- feeding the cropped section, the parameters and/or data generated therefrom, and the control region to a trained conditional generative machine learning model, wherein the cropped section serves as input data to the trained conditional generative machine learning model and the parameters and/or data generated therefrom and the control region serve as condition, wherein the conditional generative machine learning model is configured and was trained based on training data to generate a mask at a position within a control region in a reference image, and to inpaint the mask with a visible pathological feature;
- receiving a synthetic section comprising the visible pathological feature as output from the trained conditional generative machine learning model;
- overlaying or replacing the defined section in the medical image with the synthetic section, thereby generating a synthetic medical image;
- outputting the synthetic medical image.

Embodiment 2: A computer-implemented method comprising:
- displaying a medical image to a user via a graphical user interface;
- receiving input from the user via the graphical user interface, wherein the input specifies parameters of a pathological feature to be inserted into the medical image, and a position in the medical image, wherein the parameters comprise a size of the pathological feature and a shape of the pathological feature, wherein the position indicates where in the image the pathological feature is to be inserted;
- defining a control region based at least in part on the size of the pathological feature, wherein the control region defines the region in the medical image into which the pathological feature is to be inserted;
- defining a section around the position in the image, wherein the section encompasses the control region;
- cropping the section;
- feeding (a) the cropped section, (b) the parameters and/or data generated therefrom, and (c) the control region to a trained conditional generative machine learning model, wherein the cropped section serves as input data to the trained conditional generative machine learning model and (i) the parameters and/or data generated therefrom and (ii) the control region serve as condition, wherein the conditional generative machine learning model is configured and was trained based on training data to generate a mask at the position within the control region in the medical image, and to inpaint the mask with the pathological feature, thereby generating a synthetic section, wherein the mask defines the shape of the pathological feature to be inserted;
- receiving the synthetic section comprising the pathological feature as output from the trained conditional generative machine learning model;
- overlaying or replacing the defined section in the medical image with the synthetic section, thereby generating a synthetic medical image;
- outputting the synthetic medical image.

Embodiment 3: The method of any one of embodiments 1 or 2, wherein the trained conditional generative machine learning model comprises two submodels, a first submodel and a second submodel, wherein the first submodel is configured to generate the mask at the position defined by the user within the control region, and the second submodel is configured to inpaint the mask generated by the first submodel with the pathological feature.

Embodiment 4: The method of embodiment 3, wherein the first submodel is or comprises or is based on a diffusion model.

Embodiment 5: The method of any one of embodiments 3 or 4, wherein the second submodel is or comprises or is based on a diffusion model.

Embodiment 6: The method of any one of embodiments 1 to 5, wherein the training data comprised or was based on (i) a plurality of medical reference images, each medical reference image representing a reference area of a reference object and containing a pathological feature, and (ii) parameters of the pathological feature.

Embodiment 7: The method of any one of embodiments 3 to 6, wherein the first submodel was trained on training data, wherein the training data for training the first submodel comprised, for each reference object of the plurality of reference objects, (i) a medical reference image of a reference area of the reference object comprising a pathological feature, and a (ii) mask delineating the pathological feature.

Embodiment 8: The method of any one of embodiments 3 to 7, wherein training of the first submodel comprised, for each reference object of the plurality of reference objects:
- defining a control region surrounding the mask,
- generating a noisy mask by adding noise to the mask,
- training the first submodel to denoise the noisy mask within the control region, wherein the parameters of the pathological feature serve as condition, wherein the parameters of the pathological features comprise a shape of the pathological feature.

Embodiment 9: The method of any one of embodiments 1 to 8, wherein the parameters of the pathological feature further comprise orientation, margin, density, opacity, internal structure, surrounding tissue effects, vascularity, and/or enhancement pattern.

Embodiment 10: The method of any one of embodiments 1 to 9, wherein the parameters of the pathological feature further comprise margin, sphericity, lobulation, spiculation and/or malignancy.

Embodiment 11: The method of any one of embodiments 1 to 10, wherein the parameters of the pathological feature further comprise homogeneity, heterogeneity, presence and/or type of calcification, subtlety, and/or texture.

Embodiment 12: The method of any one of embodiments 1 to 11, wherein the pathological feature is or comprises a lesion.

Embodiment 13: The method of any one of embodiments 1 to 12, wherein the pathological is or comprises a tumour.

Embodiment 14: The method of any one of embodiments 1 to 13, wherein the pathological is or comprises an inflammatory change.

Embodiment 15: The method of any one of embodiments 1 to 14, wherein the pathological is or comprises a fracture.

Embodiment 16: The method of any one of embodiments 1 to 15, wherein the pathological is or comprises a degenerative abnormality.

Embodiment 17: The method of any one of embodiments 1 to 16, wherein the pathological is or comprises a vascular abnormality.

Embodiment 18: The method of any one of embodiments 1 to 17, wherein the pathological is or comprises a calcification.

Embodiment 19: The method of any one of embodiments 1 to 18, wherein the pathological is or comprises a foreign body.

Embodiment 20: The method of any one of embodiments 1 to 19, wherein the geometric center of the control region corresponds to the position of the pathological feature defined by the user.

Embodiment 21: The method of any one of embodiments 1 to 20, wherein the control region is a circle.

Embodiment 22: The method of any one of embodiments 1 to 20, wherein the control region is a sphere.

Embodiment 23: The method of any one of embodiments 1 to 22, wherein the section is larger than the control region.

Embodiment 24: The method of any one of embodiments 1 to 23, wherein the section is 1.5 to 8 times larger than the control region.

Embodiment 25: The method of any one of embodiments 1 to 24, wherein the section encompasses the control region.

Embodiment 26: The method of any one of embodiments 1 to 25, wherein the medical image is or comprises a 2D image.

Embodiment 27: The method of any one of embodiments 1 to 26, wherein each medical reference image is or comprises a 2D image.

Embodiment 28: The method of any one of embodiments 1 to 25, wherein the medical image is a stack of 2D images.

Embodiment 29: The method of any one of embodiments 1 to 25 or 28, wherein each medical reference image is a stack of 2D images.

Embodiment 30: The method of any one of embodiments 1 to 25, wherein the medical image is a 3D image.

Embodiment 31: The method of any one of embodiments 1 to 25 or 30, wherein each medical reference image is a 3D image.

Embodiment 32: The method of any one of embodiments 1 to 25, wherein the medical image comprises three medical 2D images representing layers along defined axes of a three-dimensional examination area of an examination object.

Embodiment 33: The method of embodiment 32, wherein the axes are the three primary anatomical axes of the human body.

Embodiment 34: The method of any one of embodiments 1 to 33, wherein the medical image represents a healthy examination area of an examination object.

Embodiment 35: The method of any one of embodiments 1 to 34, wherein the medical image represents an examination area of an examination object, wherein the examination object is a human and the examination area is part of the human.

Embodiment 36: The method of any one of embodiments 6 to 35, wherein each reference object is a human and the reference area is part of the human.

Embodiment 37: The method of any one of embodiments 32 to 36, wherein the examination area is or comprises a liver, kidney, heart, lung, brain, stomach, bladder, prostate, intestine, thyroid, eye, breast, skin, pancreas, bone or a part of said parts of a human.

Embodiment 38: The method of any one of embodiments 6 to 37, wherein the reference area is or comprises a liver, kidney, heart, lung, brain, stomach, bladder, prostate, intestine, thyroid, eye, breast, skin, pancreas, bone or a part of said parts of a human.

Embodiment 39: The method of any one of embodiments 1 to 38, wherein the medical image is a radiologic image.

Embodiment 40: The method of any one of embodiments 6 to 39, wherein each medical reference image is a radiologic image.

Embodiment 41: The method of any one of embodiments 1 to 40, wherein the medical image is or comprises an MR image.

Embodiment 42: The method of any one of embodiments 6 to 41, wherein each medical reference image is or comprises an MR image.

Embodiment 43: The method of any one of embodiments 1 to 42, wherein the medical image is or comprises a CT image.

Embodiment 44: The method of any one of embodiments 6 to 43, wherein each medical reference image is or comprises a CT image.

Embodiment 45: The method of any one of embodiments 1 to 44, wherein the medical image is or comprises an X-ray image.

Embodiment 46: The method of any one of embodiments 6 to 45, wherein each medical reference image is or comprises an X-ray CT image.

Embodiment 47: The method of any one of embodiments 1 to 46, wherein the medical image is or comprises an OCT image.

Embodiment 48: The method of any one of embodiments 6 to 47, wherein each medical reference image is or comprises an OCT image.

Embodiment 49: The method of any one of embodiments 1 to 48, wherein the medical image is or comprises a histological image.

Embodiment 50: The method of any one of embodiments 6 to 49, wherein each medical reference image is or comprises a histological image.

Embodiment 51: A computer system comprising:
a processing unit; and
a memory storing a computer program configured, when executed by the processing unit, to cause the computer system to perform the method of any one of embodiments 1 to 50.

Embodiment 52: A non-transitory computer readable storage medium having stored thereon software instructions that, when executed by a processor of a computer system, cause the computer system to execute the method of any one of embodiments 1 to 50.

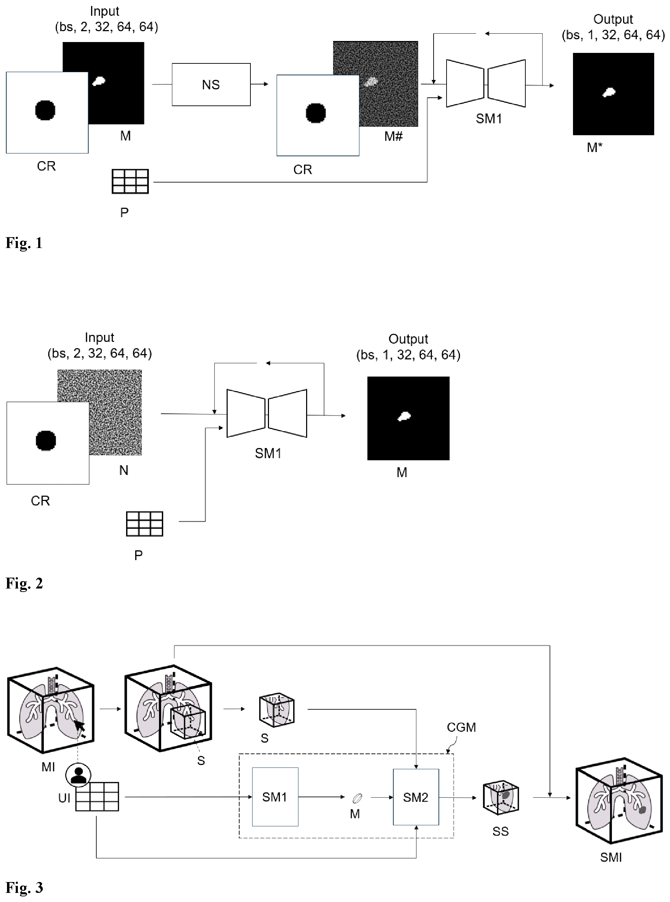

Fig. 1 shows schematically and by way of example the training of the first submodel. The training data comprises, for each reference object of a plurality of reference objects, a mask M of a pathological feature, a control region CR surrounding the mask, and one or more parameters of the pathological feature. Fig. 1 shows only one data set of a reference object; typically, the training data comprises a plurality of such data sets. The data set comprises a mask M of a pathological feature, a control region CR, and one or more parameters P of the pathological feature.

The one or more parameters P specify the shape of the pathological feature. The shape of the pathological feature may be indicated by a sphericity, for example.

The one or more parameters P may specify further characteristics of the pathological feature, such as its orientation.

In this example, the control region CR and the mask M are represented by 2D images. In this example, the control region CR is a circle that surrounds the pathological feature. The circle defines at least partly the size of the pathological feature.

Noise is added to the mask using a noise scheduler NS. The noise scheduler NS gradually adds noise (e.g., Gaussian noise) over a fixed number of time steps. The noise scheduler specifies the variance of the noise added at each time step. The result is a noisy mask M#.

The first submodel SM1 is trained to gradually remove the noise and reconstruct the original mask M. During training, the control region CR is the bounding sphere of the real mask and may be concatenated as a condition to the input of the first submodel SM1, with the real mask M serving as the target. The output of the first submodel SM1 is a predicted mask M*, which may be compared with the real mask M to determine deviations and reduce them in an optimization process by modifying model parameters of the first submodel SM1.

The steps mentioned are repeated for a plurality data sets. The training of the first submodel SM1 may be ended when a stop criterion is met. Such a stop criterion can be for example: a predefined maximum number of training steps/cycles/epochs has been performed, deviations between output data and target data can no longer be reduced by modifying the model parameters, a predefined minimum of the loss function is reached, and/or an extreme value (e.g., maximum or minimum) of another performance value is reached.

Once the first submodel SM 1 has been trained, it can be used to generate masks. This is illustrated schematically in Fig. 2.

Fig. 2 shows an example of how a mask is generated using the trained first submodel SM1. The starting point is a noise sample N (for example, Gaussian noise).

The noise sample N, a control region CR, and one or more parameters P are fed into the trained submodel SM1. The control region CR defines at least partly the size of the mask to be generated by the trained submodel SM1.

The one or more parameters define the shape (e.g., the sphericity) and, maybe, further properties of the mask. The trained submodel SM1 generates the mask M based on the noise sample N using the control region CR and the one or more parameters P as conditions. Post-processing steps that are usually performed are not shown in Fig. 2.

The second submodel is trained to generate a synthetic section with a pathological feature based on a section of a medical image, a mask, and parameters that specify the pathological feature. The mask defines the location and shape of the pathological feature. The mask may be provided by the first submodel.

The second submodel may be or comprise or be based on the LeFusion model as described by H. Zhang *et al.* (see, e.g., H. Zhang et al.: LeFusion: Controllable Pathology Synthesis via lesion-focused diffusion models, arXiv:2403.14066v2). LeFusion is a lesion-focused diffusion model designed to generate synthetic medical images containing lesions along with corresponding segmentation masks. LeFusion generates lesion-containing image-segmentation pairs from lesion-free images. This allows for the creation of diverse medical datasets that include various types of lesions without requiring an extensive collection of pathological data. By integrating forward-diffused background contexts into the reverse diffusion process, LeFusion maintains high-quality backgrounds while generating lesions. This is crucial since generating anatomically correct backgrounds is more complex than synthesizing isolated lesions. LeFusion employs several strategies to enhance control over the generated lesions, which can also be used in the case of the present disclosure. For example, histograms of lesion are used as an additional condition when generating lesions. This histogram-based texture control allows for the generation of lesions with specific texture characteristics, which is particularly useful for multi-peak lesions (lesions with distinct types). For example, multi-channel decomposition enables the simultaneous generation of multiple classes of lesions, allowing for more complex scenarios where different types of lesions are present in a synthetic medical images.

The training of the LeFusion models involves a decoupled approach where the model focuses solely on lesion areas while preserving the integrity of the background. This is achieved by applying a lesion-focused loss during training, which ensures that the model learns to predict only the lesion and ignores the background. The training data comprises pairs of lesion-free medical images and their corresponding lesion masks. These masks indicate where lesions should be synthesized within the normal images. The model learns to fill these masks with realistic lesion textures while keeping the background intact. During training, the model incorporates histogram information from the ground truth lesions to control the texture of the generated lesions. This allows for the generation of lesions with specific characteristics, particularly useful for multi-peak lesions. For scenarios requiring multiple classes of lesions (e.g., different types of cardiac lesions), the model can be trained using a multi-channel decomposition strategy, where each channel corresponds to a different lesion type.

Fig. 3 shows an example and schematic representation of the generation of a synthetic medical image using a trained conditional generative model.

Starting point is a medical image MI. In the example shown in Fig. 3, the medical image is a 3D image of the human lung. The medical image MI is displayed to a user. The user specifies a position in the medical image MI using a computer mouse via a graphical user interface. The graphical user interface is indicated by the mouse pointer, which the user uses to specify the position in the medical image MI. In addition, the user provides further user input UI, the further user input UI specifying parameters of a visible pathological feature to be added to the medical image MI.

A section S is defined around the position specified by the user. The section S is cut out of the medical image MI.

The cropped section S and the user input UI is fed to a trained conditional generative model CGM. The conditional generative model CGM comprises two submodels, a first submodel SM1 and a second submodel SM2. The first submodel SM1 is configured and was trained on training data to generate a mask at the position specified by the user. The mask divides the section S into background and foreground. The foreground is the area that is to be replaced by a pathological feature. The background is the area that should not be changed when inserting the pathological feature.

The user input (and/or data derived from it) fed into the first SM1 model defines the position, size, and shape of the mask. A control region may be generated from the user input, which defines at least the position and size of the mask (as described in relation to Fig. 1 and Fig. 2). At least a portion of the user input UI is fed into the first submodel SM1 as condition(s). The first submodel SM1 generates a mask as output.

The second submodel SM2 is configured and was trained on training data to inpaint the mask provided by the first submodel SM1 with the pathological feature specified by the user. The cropped section S is fed into the second submodel SM2 as input data. At least a portion of the user input UI is fed into the second submodel SM2 as conditions. The mask M provided by the first submodel SM1 specifies which part of the section S the second submodel SM2 should treat as foreground and which part of section S the second model SM2 should treat as background. The output of the second submodel SM2 is a synthetic section SS in which the physiological feature is inserted at the position specified by the user (in the area specified by the mask as the foreground).

In a next step, the section S within the medical image MI is overlayed and/or replaced by the synthetic section SS. The result is a synthetic medical image SMI containing the pathological feature.

The synthetic medical image SMI can be output, i.e., displayed on a display, printed out on a printer, stored in a data storage device, and/or transmitted to a separate computer system.

The operations in accordance with the teachings herein may be performed by at least one computer system specially constructed for the desired purposes or general-purpose computer system specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the invention.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

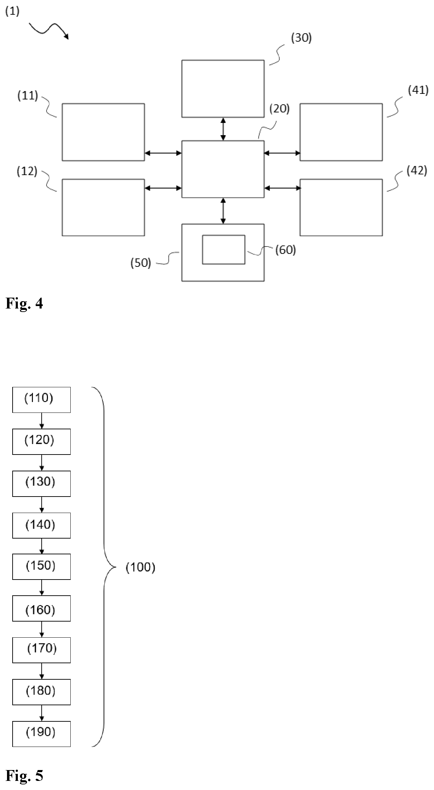

Fig. 4 illustrates a computer system (1) according to some example implementations of the present disclosure in more detail.

Generally, a computer system of exemplary implementations of the present disclosure may be referred to as a computer and may comprise, include, or be embodied in one or more fixed or portable electronic devices. The computer may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information. The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs, which may be stored onboard the processing unit (20) or otherwise stored in the memory (50) of the same or another computer.

The processing unit (20) may be a number of processors, a multi-core processor or some other type of processor, depending on the particular implementation. For example, it may be a central processing unit (CPU), a field programmable gate array (FPGA), a graphics processing unit (GPU) and/or a tensor processing unit (TPU). Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program to perform one or more functions, the processing unit (20) of various examples may be capable of performing one or more functions without the aid of a computer program. In either instance, the processing unit (20) may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory (50) may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium or data memory. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (screen) may be configured to present or otherwise display information to a user, suitable examples of which include a liquid crystal display (LCD), light-emitting diode display (LED), plasma display panel (PDP) or the like. The user input interface(s) (11) may be wired or wireless and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions (60) may be stored in memory (50) and executed by processing unit (20) that is thereby programmed, to implement functions of the systems, subsystems, tools and their respective elements described herein. As will be appreciated, any suitable program code instructions (60) may be loaded onto a computer or other programmable apparatus from a computer-readable storage medium to produce a particular machine, such that the particular machine becomes a means for implementing the functions specified herein. These program code instructions (60) may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions (60) may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions (60) may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions (60) may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code instructions (60) stored in the memory (50). It will also be understood that one or more functions, and combinations of functions, may be implemented by special purpose hardware-based computer systems and/or processing circuitry which perform the specified functions, or combinations of special purpose hardware and program code instructions.

The computer system of the present disclosure may be in the form of a laptop, notebook, netbook, and/or tablet PC; it may also be a component of an MRI scanner, a CT scanner, an ultrasound diagnostic machine or any other device for the generation and/or processing of medical images.

Fig. 5 shows an embodiment of the computer-implemented method of the present disclosure in the form of a flow chart. The method (100) comprises:
- (110): displaying a medical image to a user via a graphical user interface;
- (120): receiving input from the user via the graphical user interface, wherein the input specifies parameters of a pathological feature to be inserted into the medical image, and a position in the medical image, wherein the parameters comprise a size of the pathological feature and a shape of the pathological feature, wherein the position indicates where in the medical image the pathological feature is to be inserted;
- (130): defining a control region based at least in part on the size of the pathological feature, wherein the control region defines the region in the medical image into which the pathological feature is to be inserted;
- (140): defining a section around the position in the image, wherein the section encompasses the control region;
- (150): cropping the section;
- (160): feeding the cropped section, the parameters and/or data generated therefrom, and the control region to a trained conditional generative machine learning model, wherein the cropped section serves as input data to the trained conditional generative machine learning model and (i) the parameters and/or data generated therefrom and (ii) the control region serve as condition, wherein the conditional generative machine learning model is configured and was trained based on training data to generate a mask at the position within the control region in the medical image, and to inpaint the mask with the pathological feature, thereby generating a synthetic section, wherein the mask defines the shape of the pathological feature to be inserted;
- (170): receiving the synthetic section comprising the pathological feature as output from the trained conditional generative machine learning model;
- (180): overlaying or replacing the defined section in the medical image with the synthetic section, thereby generating a synthetic medical image;
- (190): outputting the synthetic medical image.

## Claims

1. A computer-implemented method comprising:
- displaying a medical image to a user via a graphical user interface;
- receiving input from the user via the graphical user interface, wherein the input specifies parameters of a pathological feature to be inserted into the medical image, and a position in the medical image, wherein the parameters comprise a size of the pathological feature and a shape of the pathological feature, wherein the position indicates where in the medical image the pathological feature is to be inserted;
- defining a control region based at least in part on the size of the pathological feature, wherein the control region defines the region in the medical image into which the pathological feature is to be inserted;
- defining a section around the position in the image, wherein the section encompasses the control region;
- cropping the section;
- feeding the cropped section, the parameters and/or data generated therefrom, and the control region to a trained conditional generative machine learning model, wherein the cropped section serves as input data to the trained conditional generative machine learning model and (i) the parameters and/or data generated therefrom and (ii) the control region serve as condition, wherein the conditional generative machine learning model is configured and was trained based on training data to generate a mask at the position within the control region in the medical image, and to inpaint the mask with the pathological feature, thereby generating a synthetic section, wherein the mask defines the shape of the pathological feature to be inserted;
- receiving the synthetic section comprising the pathological feature as output from the trained conditional generative machine learning model;
- overlaying or replacing the defined section in the medical image with the synthetic section, thereby generating a synthetic medical image;
- outputting the synthetic medical image.

2. The method of claim 1, wherein the trained conditional generative machine learning model comprises two submodels, a first submodel and a second submodel, wherein the first submodel is configured to generate a mask at the position defined by the user within the control region, and the second submodel is configured to inpaint the mask generated by the first submodel with the pathological feature.

3. The method of claim 1 or 2, wherein the conditional generative model was trained on training data, wherein the training data comprised or was based on (i) a plurality of medical reference images, each medical reference image representing a reference area of a reference object and containing a pathological feature, and (ii) parameters of the pathological feature.

4. The method of claim 2 or 3, wherein the first submodel was trained on training data, wherein the training data for training the first submodel comprised, for each reference object of the plurality of reference objects, (i) a medical reference image of a reference area of the reference object comprising a pathological feature, and a (ii) mask delineating the pathological feature.

5. The method of claim 4, wherein training of the first submodel comprised, for each reference object of the plurality of reference objects:
- defining a control region surrounding the mask,
- generating a noisy mask by adding noise to the mask,
- training the first submodel to denoise the noisy mask within the control region, wherein the parameters of the pathological feature serve as condition, wherein the parameters of the pathological features comprise a shape of the pathological feature.

6. The method of any one of claims 1 to 5, wherein the parameters of the pathological feature comprise margin, sphericity, lobulation, spiculation and/or malignancy.

7. The method of any one of claims 1 to 6, wherein the pathological feature is a lesion.

8. The method of any one of claims 1 to 7, wherein the medical image represents an examination area of an examination object, wherein the examination object is a human and the examination area is part of the human.

9. The method of any one of claims 3 to 8, wherein each reference object is a human and the reference area is part of the human.

10. The method of any one of claims 8 or 9, wherein the examination area is or comprises a liver, kidney, heart, lung, brain, stomach, bladder, prostate, intestine, thyroid, eye, breast, skin, bone or a part of said parts of a human.

11. The method of any one of claims 3 to 10, wherein the reference area is or comprises a liver, kidney, heart, lung, brain, stomach, bladder, prostate, intestine, thyroid, eye, breast, skin, bone or a part of said parts of a human.

12. The method of any one of claims 1 to 11, wherein the medical image is a radiologic image.

13. The method of any one of claims 1 to 12, wherein each medical reference image is a radiologic image.

14. A computer system comprising:
a processing unit; and
a memory storing a computer program configured, when executed by the processing unit, to cause the computer system to perform the method of any one of claims 1 to 13.

15. A non-transitory computer readable storage medium having stored thereon software instructions that, when executed by a processor of a computer system, cause the computer system to execute the method of any one of claims 1 to 13.
